# EUROPEAN PATENT APPLICATION

(11) **EP 3 696 835 A1**
(43) Date of publication of application: **19.08.2020**
(21) Application number: 18866887.5
(22) Date of filing: 31.01.2018
(51) Int. Cl.: H01G 9/055, H01G 9/00

(54) **ELECTRODE MATERIAL FOR ALUMINUM ELECTROLYTIC CAPACITORS AND METHOD FOR PRODUCING SAME**

(30) Priority: 10.10.2017 JP 2017196912
(71) Applicant: Toyo Aluminium Kabushiki Kaisha, Osaka-shi, Osaka 541-0056 (JP)
(72) Inventor: MURAMATSU, Kenji, Osaka-shi, Osaka 541-0056 (JP); TAIRA, Toshifumi, Osaka-shi, Osaka 541-0056 (JP); MURASHIMA, Masaaki, Osaka-shi, Osaka 541-0056 (JP)
(74) Representative: Nieuwenhuys, William Francis
(86) International application number: PCT/JP2018/003114
(87) International publication number: WO 2019/073616

(57) **Abstract**

The invention provides an electrode material for aluminum electrolytic capacitors that is capable of showing the capacitance required for capacitors, and that exhibits excellent bending strength to withstand a winding process during the production of a capacitor. The invention provides an electrode material for aluminum electrolytic capacitors, comprising a sintered body layer consisting of an aluminum sintered body on one or both sides of a substrate, wherein the sintered body layer has a plurality of cracks, and the cracks are present on the surface of the sintered body layer at an area percentage of 1.0% or more.

## Description

### Technical Field

The present invention relates to an electrode material for aluminum electrolytic capacitors, and a method for producing the electrode material.

### Background Art

When processing an electrode material for aluminum electrolytic capacitors, it is a conventional practice to increase the surface area of aluminum foil by forming etching pits by etching treatment. The etching treatment increases the surface area of the electrode material for aluminum electrolytic capacitors, making it possible to obtain a capacitor with a high capacitance.

The surface of the electrode material for aluminum electrolytic capacitors is anodized to form an oxide film that functions as a dielectric. Accordingly, various anode electrode materials (foils) for aluminum electrolytic capacitors for a variety of purposes can be produced by forming an oxide film, by applying a varying voltage to the surface according to the voltage to be used.

Etching treatments require the use of an aqueous hydrochloric acid solution that contains sulfuric acid, phosphoric acid, nitric acid, etc., in hydrochloric acid, which places a significant burden on the environment. The treatment thereof also incurs a significant burden in terms of economics and labor. Additionally, in the etching treatment, non-uniform etching pits may be formed; pits may easily merge in some regions; and pits may be difficult to form in other regions, thus posing problems in terms of pit control. Further, the formation of many small pits may lower the strength of the electrode material for aluminum electrolytic capacitors.

Therefore, attempts have recently been made to increase the surface area of an electrode material for aluminum electrolytic capacitors, without performing etching treatment. For example, Patent Literature (PTL) 1 proposes forming a film made of a composition containing powder of at least one of aluminum and an aluminum alloy on a substrate, and sintering the film. According to this method, a surface area greater than the area of pits formed by etching can be obtained; and, as a result, a capacitor with a high capacitance can be obtained.

However, the electrode material for aluminum electrolytic capacitors disclosed in PTL 1 also has a problem in terms of strength. During anodization, in particular, this electrode material is susceptible to breakage. As stated above, the electrode material for aluminum electrolytic capacitors disclosed in PTL 1 is obtained by sintering the film made of a composition containing an aluminum powder and/or an aluminum alloy powder. In the production of an aluminum electrolytic capacitor, an aluminum anode foil (material) is often wound with a very small diameter together with a separator and a cathode foil (material). To withstand the winding, the electrode material for aluminum electrolytic capacitors that constitute an aluminum anode foil is required to have a high bending strength.

The bending strength of an electrode material for aluminum electrolytic capacitors can improve by increasing the powder diameter of the aluminum powder and/or aluminum alloy powder for use in the production of an electrode material for aluminum electrolytic capacitors. In this case, however, the surface area of the electrode material for aluminum electrolytic capacitors will be reduced; thus, if this electrode material for aluminum electrolytic capacitors is used, an aluminum electrolytic capacitor with a reduced capacitance will be obtained. Conversely, if the powder diameter of aluminum powder and/or aluminum alloy powder is reduced to increase the capacitance of the electrode material for aluminum electrolytic capacitors, the bending strength of the electrode material for aluminum electrolytic capacitors will become insufficient.

Given the above, PTL 2 proposes forming an electrode material for aluminum electrolytic capacitors by subjecting the sintered body to embossing, and adjusting the surface roughness of the sintered body to be within a specific range; the thus-obtained electrode material for aluminum electrolytic capacitors is less susceptible to breakage during anodization.

However, even in this method, there is still room for improvement in terms of the capacitor capacity and production costs. The production method disclosed in PTL 2 requires embossing, which poses a problem in terms of increased production costs. Another problem is that overly deep embossing causes a tendency to reduce the capacitance.

PTL 3 proposes forming an electrode material for aluminum electrolytic capacitors by using an aluminum foil substrate (aluminum foil as a substrate) to which manganese (Mn) is added; the thus-obtained electrode material is less susceptible to breakage during anodization.

However, to produce a capacitor using an electrode material that has been subjected to anodization, even the production method of PTL 3 is not sufficient to satisfactorily prevent the electrode material and anodic oxide film from being broken during the winding process. Thus, an electrode material exhibiting more excellent bending strength has been demanded.

### Citation List

### Patent Literature

PTL 1: JP2008-98279A
PTL 2: WO 2016/136804
PTL 3: WO 2015/098644

### Summary of Invention

### Technical Problem

In view of the above circumstances, an object of the present invention is to provide an electrode material for aluminum electrolytic capacitors; the material exhibiting excellent bending strength, and being capable of showing the capacitance required for capacitors.

### Solution to Problem

The present inventors conducted extensive research to achieve the above object. As a result, the present inventors found that an electrode material exhibiting excellent bending strength can be produced by forming cracks on the surface of the electrode material for aluminum electrolytic capacitors. After further research based on these findings, the present invention has been accomplished.

More specifically, the present invention provides the following electrode material for aluminum electrolytic capacitors.
Item 1. An electrode material for aluminum electrolytic capacitors, comprising
   a sintered body layer consisting of an aluminum sintered body on one or both sides of a substrate,
   wherein the sintered body layer has a plurality of cracks, and the cracks are present on the surface of the sintered body layer at an area percentage of 1.0% or more.
Item 2. The electrode material according to Item 1, wherein the sintered body layer has a total thickness of 40 to 400 µm.
Item 3. The electrode material according to Item 1 or 2, wherein the substrate is an aluminum foil having a thickness of 10 to 80 µm.
Item 4. The electrode material according to any one of Items 1 to 3, wherein the sintered body layer is a sintered body comprising at least one member selected from the group consisting of an aluminum powder and aluminum alloy powders.
Item 5. The electrode material according to any one of Items 1 to 4, wherein the aluminum powder and aluminum alloy powders have an average particle size of 1 to 15 µm.
Item 6. The electrode material according to any one of Items 1 to 3, further comprising an anodic oxide film on the surface of the sintered body.
Item 7. A method for producing an electrode material for aluminum electrolytic capacitors, comprising
   (1) step 1 of applying a paste composition containing at least one member selected from the group consisting of an aluminum powder and aluminum alloy powders, and a resin binder, to one or both sides of a substrate to form an unsintered laminate;
   (2) step 2 of allowing the unsintered laminate to pass through a roll having a diameter of 5 to 60 mm to form cracks; and
   (3) step 3 of sintering the unsintered laminate at 560 to 660°C to form a sintered laminate.
Item 8. The production method according to Item 7, wherein the aluminum powder and aluminum alloy powders have an average particle size D50 of 1 to 15 µm.
Item 9. The production method according to Item 7 or 8, wherein the substrate is an aluminum foil having a thickness of 10 to 80 µm.
Item 10. The production method according to any one of Items 7 to 9, further comprising an anodization step after step 3.

### Advantageous Effects of Invention

The electrode material for aluminum electrolytic capacitors according to the present invention is capable of showing the capacitance required for capacitors, and exhibits excellent bending strength.

### Brief Description of Drawings

Fig. 1 is a scanning electron micrograph of the surface of a sintered body layer.
Fig. 2 is a drawing explaining a bending strength evaluation test.

### Description of Embodiments

### 1. Electrode Material for Aluminum Electrolytic Capacitors

The electrode material for aluminum electrolytic capacitors of the present invention (hereinafter also simply referred to as "the electrode material") comprises a sintered body layer consisting of an aluminum sintered body on one or both sides of a substrate; wherein the sintered body layer has a plurality of cracks, and the cracks are present on the surface of the sintered body layer at an area percentage of 1.0% or more.

### Substrate

For the substrate, known substrates may be widely used, as long as they are for use as a substrate of an electrode material for aluminum electrolytic capacitors.

The substrate is preferably an aluminum foil of pure aluminum or an aluminum alloy. The aluminum alloy may be an aluminum alloy comprising at least one metal element selected from the group consisting of silicon (Si), iron (Fe), copper (Cu), manganese (Mn), magnesium (Mg), chromium (Cr), zinc (Zn), titanium (Ti), vanadium (V), gallium (Ga), nickel (Ni), and boron (B) within required ranges; or may be an aluminum containing the above element or elements as inevitable impurity elements.

The thickness of the substrate is preferably 10 µm or more, and more preferably 20 µm or more, to ensure the strength thereof. However, in consideration of the capacity per volume as an electrode material for capacitors, the thickness of the substrate is preferably 80 µm or less, and more preferably 40 µm or less.

Further, the surface of the substrate may be roughened in order to strengthen the adhesion to the sintered body layer described below.

### Sintered Body Layer

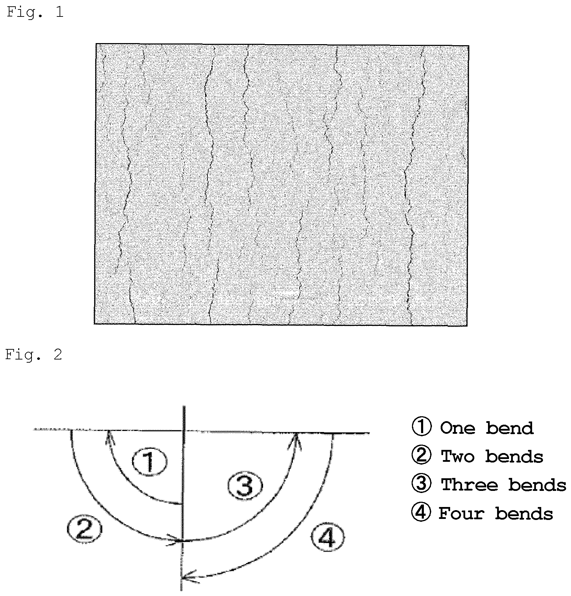

The electrode material of the present invention comprises a sintered body layer on one or both sides of the substrate. The sintered body layer consists of an aluminum sintered body, and has a plurality of cracks. The plurality of cracks preferably extends substantially in the same direction, as shown in Fig. 1.

The aluminum sintered body constituting the sintered body layer comprises at least one member selected from the group consisting of an aluminum powder and aluminum alloy powders, and is preferably a porous sintered body having a three-dimensional network structure in which the particles are connected to each other by sintering while maintaining a space between them. Due to this structure, the surface area of the sintered body layer increases, making it possible to obtain an electrode material that is capable of producing a capacitor with a high capacitance.

The aluminum sintered body preferably comprises at least one of an aluminum powder and aluminum alloy powders.

The aluminum purity of the aluminum powder is preferably 99.80 mass% or more, more preferably 99.85 mass% or more, and further preferably 99.99 mass% or more.

On the other hand, the aluminum alloy powder may contain at least one member selected from silicon (Si), iron (Fe), copper (Cu), manganese (Mn), magnesium (Mg), chromium (Cr), zinc (Zn), titanium (Ti), vanadium (V), gallium (Ga), nickel (Ni), boron (B), zirconium (Zr), and the like. These elements are contained in the aluminum alloy in an amount of preferably 100 mass ppm or less, and particularly 50 mass ppm or less.

The average particle size of the aluminum powder and aluminum alloy powders is preferably 1 to 15 µm. In the present specification, the average particle size of the powder in the aluminum sintered body is determined by observing and measuring the cross-section of the aluminum sintered body with a scanning electron microscope. More specifically, although the powder after sintering is in a state of being partially melted or being connected to each other, portions with a substantially circular shape can be regarded as approximate particles. Therefore, in the above cross-sectional observation, the particle size of any 50 particles is measured while considering the maximum size (major diameter) of each particle having a substantially circular shape to be their particle size, and the arithmetic average is determined as the average particle size of the powder after sintering. The particle size of the powder obtained by this method shows almost no change from the particle size before sintering.

The area percentage of cracks present on the surface of the sintered body layer is 1.0% or more. In the present specification, the "area percentage of cracks present on the surface of the sintered body layer" refers to a percentage of the total area of the plurality of cracks in the surface area of the sintered body layer in a photograph taken from directly above the sintered body layer surface. By providing cracks on the surface of the electrode material beforehand, the electrode material is less susceptible to breakage in the winding process during the production of a capacitor. This effect can be obtained when the area percentage of cracks present on the surface of the sintered body layer (hereinafter also simply referred to as "the area percentage") is 1.0% or more, more preferably 3% or more, and still more preferably 5% or more.

The upper limit of the area percentage is preferably 10% or less, in consideration of the convenience of processing.

The breakage of the electrode material in the winding process is thus avoided; accordingly, leakage current from the capacitor is prevented from occurring.

The method for measuring and calculating the area percentage of cracks present on the surface of the sintered body layer is described in detail below.

Images of the surface of the sintered body layer are taken with a scanning electron microscope (product No.: JSM-5510) produced by JEOL, under the conditions of secondary electron images, 100x photography magnification, acceleration voltage of 15 kV, spot diameter of 20, and working distance of 20 mm.

Next, the area percentage of cracks present on the surface of the sintered body layer is calculated using WinROOF2015 image analysis software, produced by Mitani Corporation. Specifically, the images taken with a scanning electron microscope are loaded into the software as JPEG images (1280 pixels × 960 pixels), and the contrast is set to a maximum value of 100. By maximizing the contrast of the image, the percentage of binarization using thresholds of (0 to 0) to (0 to 254) becomes constant in the binarization process with two thresholds. The brightness is adjusted so that the percentage of binarization is as close to 30% as possible. After the binarization above (percentage: 30%, transparency: 125), the portions corresponding to a space are extracted. The extracted portions that have a skeleton length (length of the long axis of each extracted portion) of 50 µm or less are excluded as not corresponding to the cracks. The total area of the cracks extracted by the above operations is calculated to calculate the percentage of the cracks in the sintered body layer area in the image. This operation is performed with respect to 10 randomly selected fields of vision of the surface of the sintered body layer, and the average value is calculated to determine the area percentage of cracks present on the surface of the sintered body layer.

In the present specification, the total thickness of the sintered body layer refers to the thickness of the sintered body layer on one side of a substrate when the sintered body layer is provided on one side of the substrate, and refers to the total thickness of the sintered body layers on both sides of the substrate when the sintered body layer is provided on both sides of the substrate.

The total thickness of the sintered body layer is preferably 40 µm or more, and more preferably 60 µm or more, to improve the capacitance achieved by the resulting product used as an aluminum electrolytic capacitor electrode. On the other hand, the total thickness of the sintered body layer is preferably 400 µm or less, and more preferably 150 µm or less.

In the present specification, the total thickness of the sintered body layer is determined by measuring the thickness of the entire electrode material at 7 randomly selected points, and subtracting the thickness of the substrate from the average thickness of 5 points from among the 7 randomly selected points, excluding the maximum and minimum values. Further, in the present specification, the thickness of the sintered body layer when an anodic oxide film (described later) is provided is determined in the same manner as in the case where no anodic oxide film is provided. This is because the anodic oxide film has only a very small thickness, compared to the thickness of the sintered body layer.

### Anodic Oxide Film

A dielectric film is obtained by anodic oxidation. The film withstand voltage is 2 to 700 V. Anodization is difficult at voltages lower than 2 V or higher than 700 V. The film withstand voltage is determined in accordance with RC-2364A, a standard of the Electronic Industries Association of Japan.

### 2. Method for Producing an Electrode Material for Aluminum Electrolytic Capacitors

The method for producing an electrode material for aluminum electrolytic capacitors of the present invention comprises:
(1) step 1 of applying a paste composition containing at least one member selected from the group consisting of an aluminum powder and aluminum alloy powders, and a resin binder, to one or both sides of a substrate to form an unsintered laminate;
(2) step 2 of allowing the unsintered laminate to pass through a roll having a diameter of 5 to 60 mm to form cracks; and
(3) step 3 of sintering the unsintered laminate at 560 to 660°C to form a sintered laminate.

### Step 1

In step 1, a paste composition containing at least one member selected from the group consisting of an aluminum powder and aluminum alloy powders, and a resin binder, is applied to one or both sides of the substrate to form an unsintered laminate.

The aluminum powder as a starting material is, for example, an aluminum powder preferably having an aluminum purity of 99.80 mass% or more, more preferably 99.85 mass% or more, and still more preferably 99.99 mass% or more. The aluminum alloy powder as a starting material preferably contains one or more elements selected from, for example, silicon (Si), iron (Fe), copper (Cu), manganese (Mn), magnesium (Mg), chromium (Cr), zinc (Zn), titanium (Ti), vanadium (V), gallium (Ga), nickel (Ni), boron (B), zirconium (Zr), and the like. These elements are contained in the aluminum alloy in an amount of preferably 100 mass ppm or less, and particularly 50 mass ppm or less.

The aluminum powder and aluminum alloy powders preferably have an average particle size of 1 to 15 µm. By adjusting the average particle size to be within this range, the resulting product can be suitably used as an electrode material for aluminum electrolytic capacitors. When the average particle size is 15 µm or less, sufficient capacitance can be obtained using the resulting product as an electrode material for electrolytic capacitors.

In the present specification, the average particle size of the aluminum powder and aluminum alloy powders before sintering is defined as a D50 value determined by measuring the particle size distribution on a volume basis by a laser diffraction method.

The shapes of the aluminum powder and aluminum alloy powders are not limited; and any of spherical, amorphous, scaly, and fibrous shapes are preferable. For industrial production, a powder of spherical particles is particularly preferable.

The aluminum powder and aluminum alloy powders may be powders produced by known methods. For example, powders produced by an atomizing method, a melt-spinning process, a rotating disk method, a rotating electrode process, a rapid solidification process, etc., can be used. For industrial production, an atomizing method, in particular, a gas atomizing method, is preferable. More specifically, a powder obtained by atomizing molten metal is preferable.

The resin binder may be widely selected from known resin binders. Examples of preferable resin binders include, but are not particularly limited to, carboxy-modified polyolefin resins, vinyl acetate resins, vinyl chloride resins, vinyl chloride-vinyl acetate copolymers, vinyl alcohol resins, butyral resins, polyvinyl fluoride resins, acrylic resins, polyester resins, urethane resins, epoxy resins, urea resins, phenol resins, acrylonitrile resins, cellulose resins, paraffin wax, polyethylene wax, and other synthetic resins; waxes, tar, glue, sumac, pine resin, beeswax, and other natural resins; and waxes. These resin binders include those that volatilize upon heating, and those that remain as a residue with aluminum powder after pyrolysis, depending on the molecular weight, type of resin, etc. The resin binders may be used properly according to the desired electrical characteristics, such as capacitance.

The resin binder is contained in the paste composition in an amount of preferably 0.5 to 10 mass%, and more preferably 0.75 to 5 mass%, per 100 mass% of the paste composition. When the amount of the resin binder in the paste composition is 0.5 mass% or more, the adhesion strength between the substrate and the unsintered laminate can improve. On the other hand, when the amount of the resin binder is 10 mass% or less, degreasing is easily performed in the sintering step, and defects due to the remaining resin binder can be avoided.

Additionally, the paste composition may optionally further contain solvents, sintering aids, surfactants, etc., that are known or commercially available products. The film can thus be formed efficiently.

The solvent may be widely selected from known solvents. Examples of usable solvents include, but are not particularly limited to, water and organic solvents, such as toluene, alcohols, ketones, and esters.

The sintering aid may also be widely selected from known sintering aids. Examples of usable sintering aids include, but are not particularly limited to, aluminum fluoride, potassium fluoride, calcium fluoride, and the like.

The surfactant may also be widely selected from known surfactants. Examples of usable surfactants include, but are not particularly limited to, betaine-based surfactants, sulfobetaine-based surfactants, alkylbetaine-based surfactants, and the like.

The paste composition is applied to one or both sides of the substrate to form an unsintered laminate; and, at this time, the total thickness of the unsintered laminate is preferably 40 to 400 µm, more preferably 60 to 200 µm, and still more preferably 80 to 150 µm. Within these numerical ranges, the resulting product used as an electrode material for capacitors exhibits improved bending strength, and a capacitor produced using this electrode material also exhibits improved capacitance.

The method for forming a film on the substrate is not particularly limited. For example, a film is formed by a method of applying the paste composition by rolling, brushing, spraying, dipping, or the like; or by a known printing method, such as silk-screen printing.

It is also preferable to dry, together with the substrate, the unsintered laminate adhering onto the substrate at a temperature of 20 to 300°C for 1 to 30 minutes, as required.

### Step 2

In step 2, the unsintered laminate obtained in step 1 is allowed to pass through a roll having a diameter of 5 to 60 mm to form cracks on the surface of the unsintered laminate.

By performing the step of allowing the laminate to pass through a roll having a diameter of 5 to 60 mm, cracks are efficiently formed on the surface of the unsintered laminate. The holding angle when the unsintered laminate is allowed to pass through the roll is preferably 45 degrees or more, and more preferably 90 degrees or more, to easily form cracks. The upper limit of the holding angle is preferably 180 degrees or less, and more preferably 160 degrees or less, to suppress the formation of wrinkles.

### Step 3

In step 3, the unsintered laminate is sintered at 560 to 660°C to form a sintered laminate.

By performing step 3, the aluminum powder in the unsintered laminate is sintered to form a sintered laminate having cracks. If the heating temperature during sintering is less than 560°C, sintering does not proceed, and a desired capacitance cannot be obtained. If the heating temperature exceeds 660°C, the powder will melt, and a sufficient capacitance cannot be obtained with the resulting product used as an electrode material for an electrolytic capacitor. The sintering temperature is more preferably 570 to 650°C, and further preferably 580 to 620°C.

The sintering time is affected by the sintering temperature etc.; however, the sintering time can usually be appropriately determined within the range of about 5 to 24 hours. The sintering atmosphere is not particularly limited; and may be a vacuum atmosphere, an inert gas atmosphere, an oxidizing gas atmosphere (air), a reducing atmosphere, or the like. In particular, a vacuum atmosphere or a reducing atmosphere is preferable. The pressure conditions may also be normal pressure, reduced pressure, or increased pressure.

### Anodization Step

In another preferable embodiment, an anodization step is performed after step 3. By performing anodization treatment, an oxide film is formed on the surface of the sintered body. This oxide film functions as a dielectric substance. Thus, the resulting product can be effectively used as an aluminum electrolytic capacitor electrode.

The anodization conditions are not particularly limited. The anodization may usually be performed by applying a current of 10 mA/cm² or more and 400 mA/cm² or less for 5 minutes or more in a boric acid aqueous solution or an ammonium adipate aqueous solution with a concentration of 0.01 mol or more to 5 mol or less, at a temperature of 30°C or higher to 100°C or lower. This anodization treatment is usually performed while feeding an electrode material for aluminum electrolytic capacitors using one or more rolls on a production line.

In the anodization step, the voltage is preferably selected from 2 to 700 V. The voltage is preferably a processing voltage according to the operating voltage of the aluminum electrolytic capacitor obtained by using the resulting product as an aluminum electrolytic capacitor electrode.

According to the method for producing an electrode material of the present invention, an excellent electrode material can be obtained without performing etching treatment. This method, which does not include an etching step, requires no treatment for hydrochloric acid etc. for use in etching, thus achieving a further reduction in environmental and economic burden.

### Method for Producing an Electrolytic Capacitor

An electrolytic capacitor can be produced using the electrode material of the present invention. Examples of the method for producing the electrolytic capacitor include a method for producing an electrolytic capacitor, comprising laminating the electrode material of the present invention used as an anode foil and a cathode foil with a separator therebetween; winding the laminate to form a capacitor element; impregnating the capacitor element with an electrolyte; housing the capacitor element containing the electrolyte in a case; and sealing the case with a sealing material.

Although the above describes embodiments of the present invention, the present invention is not limited to these embodiments. It will be evident to those skilled in the art that various modifications can be made without departing from the spirit and principal concepts of the invention.

### Examples

The following describes embodiments of the present invention in more detail, with reference to Examples. However, the present invention is not limited to the Examples.

### Example 1

A resin binder solution containing 5 mass% of ethyl cellulose binder resin was obtained by adding ethyl cellulose binder resin to butyl acetate as a solvent. One hundred parts by mass of aluminum powder having an average particle size of 3 µm (Toyo Aluminium K.K., JIS A1080) was added to 60 parts by mass of the obtained resin binder solution, followed by mixing to obtain a paste composition. The obtained paste composition was applied to both sides, each to a thickness of 50 µm, of an aluminum foil having a thickness of 30 µm using a comma coater, so that the paste composition was allowed to adhere to both sides of the aluminum foil. Subsequently, drying was performed at 100°C for 1.5 minutes to obtain an unsintered laminate. For the average particle size of aluminum powder, the D50 value was calculated by using a Microtrac MT3300EX II (produced by Nikkiso Co., Ltd.) to measure the particle size distribution on a volume basis by the laser analysis method.

The obtained unsintered laminate was allowed to pass through a roll having a diameter of 5 mm at a holding angle of 150 degrees. Thereafter, sintering was performed at 600°C for 10 hours in an argon gas atmosphere to obtain a sintered laminate, thus obtaining an electrode material. The thickness of the laminate after sintering was measured, and the results revealed that the thickness did not change from the thickness of the laminate before sintering.

The obtained electrode material was further subjected to anodization treatment at a predetermined voltage. The anodization treatment was performed at a chemical conversion voltage of 550 V in accordance with RC-2364A, a standard of the Electronic Industries Association of Japan.

### Examples 2 to 4 and Comparative Examples 1 and 2

Electrode materials of Examples 2 to 4 and Comparative Example 1 were obtained by setting the diameter of the roll for use in the production as shown in Table 1. The holding angle at the time the unsintered laminate was allowed to pass through the roll was set as shown in Example 1. In Comparative Example 2, the unsintered laminate was not allowed to pass through the roll. In these Examples and Comparative Examples as well, anodization treatment was performed.

**Table 1**

| | Aluminum particle size | Unsintered laminate | Roll diameter | Crack area percentage | Capacitance | Bending strength |
|---|---|---|---|---|---|---|
| | (µm) | (µm) | (mm) | (%) | (µF/cm²) | (number) |
| Ex. 1 | 3 | 50/30/50 | 5 | 5.6 | 0.95 | 265 |
| Ex. 2 | 3 | 50/30/50 | 15 | 3.2 | 0.96 | 184 |
| Ex. 3 | 3 | 50/30/50 | 25 | 1.5 | 0.92 | 73 |
| Ex. 4 | 3 | 50/30/50 | 50 | 1.1 | 0.94 | 51 |
| Comp. Ex. 1 | 3 | 50/30/50 | 60 | 0.5 | 0.95 | 25 |
| Comp. Ex. 2 | 3 | 50/30/50 | - | 0.5 | 0.94 | 24 |

| | | | | | | |
|---|---|---|---|---|---|---|
| The numerical values in the "Unsintered laminate" column indicate the thickness of each layer: paste composition/substrate/paste composition. | | | | | | |

### Examples 5 to 8 and Comparative Examples 3 and 4

Electrode materials were produced under the conditions shown in Table 2 below. The anodization treatment was performed at a chemical conversion voltage of 700 V in accordance with RC-2364A, a standard of the Electronic Industries Association of Japan.

**Table 2**

| | Aluminum particle size | Unsintered laminate | Roll diameter | Crack area percentage | Capacitance | Bending strength |
|---|---|---|---|---|---|---|
| | (µm) | (µm) | (mm) | (%) | (µF/cm²) | (number) |
| Ex. 5 | 15 | 200/30/200 | 5 | 4.5 | 1.19 | 67 |
| Ex. 6 | 15 | 200/30/200 | 15 | 3.7 | 1.17 | 48 |
| Ex. 7 | 15 | 200/30/200 | 25 | 2.3 | 1.23 | 19 |
| Ex. 8 | 15 | 200/30/200 | 50 | 1.0 | 1.20 | 7 |
| Comp. Ex. 3 | 15 | 200/30/200 | 60 | 0.6 | 1.21 | 0 |
| Comp. Ex. 4 | 15 | 200/30/200 | - | 0.7 | 1.21 | 0 |

### Examples 9 to 12 and Comparative Examples 5 and 6

Electrode materials were produced under the conditions shown in Table 3 below. The anodization treatment was performed at a chemical conversion voltage of 2 V in accordance with RC-2364A, a standard of the Electronic Industries Association of Japan.

**Table 3**

| | Aluminum particle size | Unsintered laminate | Roll diameter | Crack area percentage | Capacitance | Bending strength |
|---|---|---|---|---|---|---|
| | (µm) | (µm) | (mm) | (%) | (µF/cm²) | (number) |
| Ex. 9 | 1 | 20/30/20 | 5 | 1.5 | 257 | 181 |
| Ex. 10 | 1 | 20/30/20 | 15 | 1.4 | 260 | 175 |
| Ex. 11 | 1 | 20/30/20 | 25 | 1.2 | 248 | 162 |
| Ex. 12 | 1 | 20/30/20 | 50 | 1.0 | 251 | 151 |
| Comp. Ex. 5 | 1 | 20/30/20 | 60 | 0.6 | 243 | 128 |
| Comp. Ex. 6 | 1 | 20/30/20 | - | 0.3 | 249 | 130 |

### Examples 13 to 16 and Comparative Example 7

Electrode materials were produced under the conditions shown in Table 4 below. The anodization treatment was performed at a chemical conversion voltage of 50 V in accordance with RC-2364A, a standard of the Electronic Industries Association of Japan.

**Table 4**

| | Aluminum particle size | Unsintered laminate | Roll diameter | Crack area percentage | Capacitance | Bending strength |
|---|---|---|---|---|---|---|
| | (µm) | (µm) | (mm) | (%) | (µF/cm²) | (number) |
| Ex. 13 | 2 | 75/10/75 | 5 | 9.8 | 57 | 87 |
| Ex. 14 | 2 | 75/10/75 | 15 | 10.0 | 56 | 85 |
| Ex. 15 | 2 | 75/10/75 | 25 | 6.7 | 55 | 61 |
| Ex. 16 | 2 | 75/10/75 | 50 | 4.6 | 54 | 24 |
| Ex. 17 | 2 | 75/10/75 | 60 | 1.5 | 56 | 8 |
| Comp. Ex. 7 | 2 | 75/10/75 | - | 0.5 | 55 | 0 |

### Examples 18 to 22 and Comparative Example 8

Electrode materials were produced under the conditions shown in Table 5 below. The anodization treatment was performed at a chemical conversion voltage of 350 V in accordance with RC-2364A, a standard of the Electronic Industries Association of Japan.

**Table 5**

| | Aluminum particle size | Unsintered laminate | Roll diameter | Crack area percentage | Capacitance | Bending strength |
|---|---|---|---|---|---|---|
| | (µm) | (µm) | (mm) | (%) | (µF/cm²) | (number) |
| Ex. 18 | 5 | 100/80/100 | 5 | 9.5 | 2.90 | 252 |
| Ex. 19 | 5 | 100/80/100 | 15 | 8.3 | 2.91 | 221 |
| Ex. 20 | 5 | 100/80/100 | 25 | 7.1 | 2.93 | 196 |
| Ex. 21 | 5 | 100/80/100 | 50 | 3.7 | 2.90 | 173 |
| Ex. 22 | 5 | 100/80/100 | 60 | 1.2 | 2.88 | 146 |
| Comp. Ex. 8 | 5 | 100/80/100 | - | 0.5 | 2.91 | 115 |

### Capacitance Evaluation Test

In accordance with RC-2364A, a standard of the Electronic Industries Association of Japan, a capacitance evaluation test was conducted with respect to the electrode materials of the Examples and Comparative Examples.

### Bending Strength Evaluation Test

The bending strength of the electrode materials after the chemical conversion treatment was measured in accordance with the MIT Automatic Folding Endurance Test defined by the Electronic Industries Association of Japan (EIAJ RC-2364A). The test was conducted using the MIT Folding Endurance Tester specified in JIS P8115. In this test, the number of bends at the point of breaking was determined to be the bending strength of each electrode material. The number of bends was counted as shown in Fig. 2. Specifically, bending a test piece 90° was counted as one bend. When the test piece was returned to its original position, the number of bends became two. When the test piece was bent 90° toward the opposite direction, the number of bends became three. When the test piece was then returned to its original position again, the number of bends became four. From the count of five onward, the bending operations were repeated as in numbers one to four until the electrode material was broken. The "Bending strength" column in Tables 1 to 5 shows the number of bending operations repeated until the electrode material was broken.

### Bending Strength Evaluation Test Results

As shown in Tables 1 to 5, the results revealed that the electrode materials of the Examples showed the capacitance required for capacitors; and exhibited excellent bending strength, unlike the electrode materials of the corresponding Comparative Examples.

## Claims

1. An electrode material for aluminum electrolytic capacitors, comprising
a sintered body layer consisting of an aluminum sintered body on one or both sides of a substrate,
wherein the sintered body layer has a plurality of cracks, and the cracks are present on the surface of the sintered body layer at an area percentage of 1.0% or more.

2. The electrode material according to claim 1, wherein the sintered body layer has a total thickness of 40 to 400 µm.

3. The electrode material according to claim 1 or 2, wherein the substrate is an aluminum foil having a thickness of 10 to 80 µm.

4. The electrode material according to any one of claims 1 to 3, wherein the sintered body layer is a sintered body comprising at least one member selected from the group consisting of an aluminum powder and aluminum alloy powders.

5. The electrode material according to any one of claims 1 to 4, wherein the aluminum powder and aluminum alloy powders have an average particle size of 1 to 15 µm.

6. The electrode material according to any one of claims 1 to 5, further comprising an anodic oxide film on the surface of the sintered body.

7. A method for producing an electrode material for aluminum electrolytic capacitors, comprising
(1) step 1 of applying a paste composition containing at least one member selected from the group consisting of an aluminum powder and aluminum alloy powders, and a resin binder, to one or both sides of a substrate to form an unsintered laminate;
(2) step 2 of allowing the unsintered laminate to pass through a roll having a diameter of 5 to 60 mm to form cracks; and
(3) step 3 of sintering the unsintered laminate at 560 to 660°C to form a sintered laminate.

8. The production method according to claim 7, wherein the aluminum powder and aluminum alloy powders have an average particle size D50 of 1 to 15 µm.

9. The production method according to claim 7 or 8, wherein the substrate is an aluminum foil having a thickness of 10 to 80 µm.

10. The production method according to any one of claims 7 to 9, further comprising an anodization step after step 3.
